Europäisches Patentamt

European Patent Office

Office européen des brevets

(19)

(11) Numéro de publication: **0 048 688**
**B1**

(12) **FASCICULE DE BREVET EUROPEEN**

(45) Date de publication du fascicule du brevet:
**02.04.86**

(51) Int. Cl.⁴: **G 01 B 11/16**

(21) Numéro de dépôt: **81810330.1**

(22) Date de dépôt: **14.08.81**

(54) **Procédé pour détecter optiquement et/ou mesurer une déformation et/ou un déplacement d'un objet ou partie d'objet, dispositif pour sa mise en oeuvre et application du procédé.**

(30) Priorité: **27.08.80 CH 6444/80**

(43) Date de publication de la demande:
**31.03.82 Bulletin 82/13**

(45) Mention de la délivrance du brevet:
**02.04.86 Bulletin 86/14**

(84) Etats contractants désignés:
**AT BE CH DE FR GB IT LI LU NL SE**

(56) Documents cités:
**FR - A - 2 133 176**
**GB - A - 917 058**

(73) Titulaire: **CABLES CORTAILLOD S.A.,**
**CH-2016 Cortaillod (CH)**

(72) Inventeur: **Tschirren, Jean-Denis, Grassilière 12,**
**CH-2016 Cortaillod (CH)**
Inventeur: **Pellaux, Jean-Paul, Petis Chênes 2,**
**CH-2000 Neuchatel (CH)**
Inventeur: **Huguenin, Reymond, Sur les Morels,**
**CH-2515 Preles (CH)**

(74) Mandataire: **Nithardt, Roland, CABINET ROLAND**
**NITHARDT** Rue Edouard Verdan 15, CH-1400 Yverdon
**(CH)**

## Description

La présente invention concerne un procédé pour détecter optiquement et/ou mesurer une déformation et/ou un déplacement d'un objet ou partie d'objet dans une direction sensiblement perpendiculaire à un faisceau lumineux de référence, comportant les phases suivantes:

a) on émet ledit faisceau lumineux de référence en direction d'un point solidaire dudit objet,

b) on interpose, sur ce faisceau de référence, un moyen optique pour prélever et dévier au moins une partie de ce faisceau de référence selon ladite direction sensiblement perpendiculaire au faisceau de référence, ce moyen optique étant rigidement lié à l'objet audit point fixe.

Elle concerne également un dispositif pour détecter optiquement et/ou mesurer une déformation et/ou un déplacement d'un objet ou partie d'objet dans une direction sensiblement perpendiculaire à un faisceau de référence, comportant une source de lumière cohérente agencée pour fournir un faisceau de référence, un moyen optique agencé pour prélever et dévier au moins une partie de ce faisceau de référence selon ladite direction, ce moyen optique étant rigidement relié à l'objet en un point fixe de ce dernier.

On connaît des moyens optiques pour détecter et/ou mesurer une déformation et/ou un déplacement d'un objet ou partie d'objet selon une direction perpendiculaire à un faisceau lumineux de référence tel que par exemple un ouvrage d'art, un pont, un barrage, une digue, un bâtiment, etc., qui comprennent des systèmes de visée tels que par exemple les théodolites ou les systèmes interférométriques. Certains nécessitent la présence permanente d'un opérateur et n'excluent pas les erreurs humaines. D'autres permettent des mesures à très haute résolution, mais sont sophistiqués et extrêmement coûteux.

La publication française FR-A-2 133 176 (voir en particulier la figure et la description correspondante) décrit un système pour détecter optiquement et/ou mesurer une déformation et/ou un déplacement d'un objet (1) [voir page 1, ligne 7] dans une direction sensiblement perpendiculaire à un faisceau lumineux de référence (7), comportant les phases suivantes:

a) on émet ledit faisceau en direction d'un point solidaire dudit objet;

b) on interpose, sur ce faisceau, un moyen optique (9) pour prélever et dévier au moins une partie (11) de ce faisceau selon ladite direction sensiblement perpendiculaire au faisceau, ce moyen optique (9) étant rigidement lié à l'objet (1) audit point fixe;

c) on détecte et/ou mesure l'intensité du faisceau dévié (11) sur un élément photosensible (13) [voir page 3, premier paragraphe].

La publication britannique GB-A-917 058 (voir en particulier les figures 1 et 2 et la description correspondante) se réfère aussi à un système pour détecter optiquement des déplacements, dans lequel on divise un faisceau lumineux émis par une source (32) en deux faisceaux distincts ayant la même intensité lumineuse lorsque l'objet à examiner n'a subi aucun déplacement, et on détecte et/ou mesure la différence des intensités des deux faisceaux divisés lorsque l'objet subit un déplacement [voir page 2, lignes 25 à 41].

Ce système est très sensible aux déplacements de l'objet et est assez bien indépendant des fluctuations de la source [voir page 1, lignes 36 à 43].

La présente invention propose un procédé de mesure simple et un dispositif robuste permettant des mesures de déformation ou de déplacement avec une résolution de l'ordre du dixième de millimètre sur une plage de l'ordre de 1 cm, qui présentent l'avantage d'améliorer l'indépendance du résultat de la mesure par rapport aux fluctuations de la source.

Dans ce but, le procédé selon l'invention est caractérisé en ce qu'il comporte en outre les phases suivantes:

c) on divise ledit faisceau dévié en deux faisceaux distincts ayant la même intensité lumineuse lorsque ledit objet n'a subi aucune déformation et/ou aucun déplacement perpendiculaire au faisceau de référence,

d) on focalise lesdits faisceaux distincts respectivement sur deux détecteurs, et

e) on mesure le rapport:

$$\frac{I_1 - I_2}{I_1 + I_2}$$

où $I_1$ représente l'intensité lumineuse de l'un des faisceaux, et où $I_2$ représente l'intensité lumineuse de l'autre faisceau.

Selon un autre aspect du procédé de l'invention, pour détecter optiquement et/ou mesurer une déformation et/ou un déplacement d'un objet ou partie d'objet dans une autre direction perpendiculaire à ladite direction et sensiblement perpendiculaire au faisceau lumineux de référence, la phase b) est modifiée dans le sens que le moyen optique prélève et dévie une partie de ce faisceau de référence et que l'on interpose, sur le faisceau de référence et en série par rapport audit moyen optique, un autre moyen optique pour prélever et dévier au moins une partie du faisceau de référence restant selon l'autre direction, cet autre moyen étant rigidement lié à l'objet à un autre point fixe et on répète les phases c), d) et e) pour ledit faisceau restant.

Le dispositif selon l'invention est caractérisé en ce qu'il comporte en outre un moyen pour diviser ledit faisceau dévié en deux faisceaux distincts, ce moyen pour diviser étant agencé de telle manière que les deux faisceaux divisés aient la même intensité lumineuse lorsque ledit objet n'a subi aucune déformation et/ou aucun déplacement perpendiculaire au faisceau de référence, et des moyens comportant deux détecteurs pour mesurer le rapport:

$$\frac{I_1 - I_2}{I_1 + I_2}$$

où $I_1$ représente l'intensité lumineuse de l'un des

deux faisceaux et $I_2$ représente l'intensité lumineuse de l'autre.

Selon une forme de réalisation avantageuse, le moyen optique comprend une surface semi-réfléchissante interposée sur le trajet dudit faisceau, cette surface semi-réfléchissante étant liée rigidement à l'objet.

Le moyen pour diviser comporte un élément prismatique interposé sur la moitié du faisceau dévié, cette moitié étant déterminée en l'absence de toute déformation et/ou de tout déplacement de l'objet, cet élément prismatique étant solidaire de l'objet et se trouvant dans une position prédéterminée par rapport à la surface semi-réfléchissante.

Le dispositif comporte également un moyen pour focaliser les deux faisceaux divisés sur les deux détecteurs, ce moyen pour focaliser comprenant au moins une lentille solidaire dudit objet et montée dans une position prédéterminée par rapport à l'élément prismatique.

L'un au moins, entre le moyen optique, le moyen pour diviser et un moyen pour focaliser les deux faisceaux sur les deux détecteurs comporte un hologramme de phase.

La surface semi-réfléchissante, l'élément prismatique et le dispositif pour focaliser les faisceaux divisés sont remplacés par un hologramme de phase.

L'hologramme de phase est noyé dans un bloc d'un matériau transparent, comportant un boîtier agencé pour fixer ledit bloc à l'objet et des moyens pour fixer les deux détecteurs.

Le dispositif comporte une seule lentille convergente, le prisme étant collé sur une moitié de cette lentille et la pointe du prisme coïncidant avec l'axe de la lentille.

Pour détecter optiquement et/ou mesurer une déformation et/ou un déplacement d'un objet ou partie d'objet dans une autre direction perpendiculaire à ladite direction et sensiblement perpendiculaire au faisceau lumineux de référence, le moyen optique est agencé pour prélever et dévier une partie de ce faisceau de référence selon ladite direction, et comprend un autre moyen optique interposé en série par rapport audit moyen optique sur le faisceau de référence restant, un autre moyen pour diviser et des autres moyens pour mesurer ledit rapport, l'autre moyen optique, l'autre moyen pour dévier et les autres moyens pour mesurer ledit rapport coopérant entre eux et étant semblables respectivement au moyen optique, au moyen pour diviser et aux moyens pour mesurer le rapport.

L'invention concerne enfin une application du procédé pour détecter et/ou mesurer une déformation de flexion d'un objet allongé, ainsi qu'une application pour détecter un déplacement perpendiculaire à la direction du faisceau de référence d'une construction liée à un terrain instable.

La présente invention sera mieux comprise en référence à la description d'exemples de réalisation et du dessin annexé, dans lequel:

La figure 1 représente une vue schématique du dispositif selon l'invention,

La figure 2 représente une autre forme de réalisation du dispositif selon l'invention, dans lequel les éléments d'optique conventionnelle ont été remplacés par une optique intégrée,

La figure 3 représente schématiquement le procédé d'enregistrement de l'hologramme de phase constituant le dispositif optique intégré,

La figure 4 représente le circuit électronqiue permettant d'effectuer la mesure du rapport

$$\frac{I_1 - I_2}{I_1 + I_2},$$

La figure 5 représente une autre forme de réalisation du dispositif illustré par la fig. 1,

La figure 6 illustre une application particulière du dispositif selon l'invention, et

La figure 7 illustre schématiquement une autre application du dispositif selon l'invention.

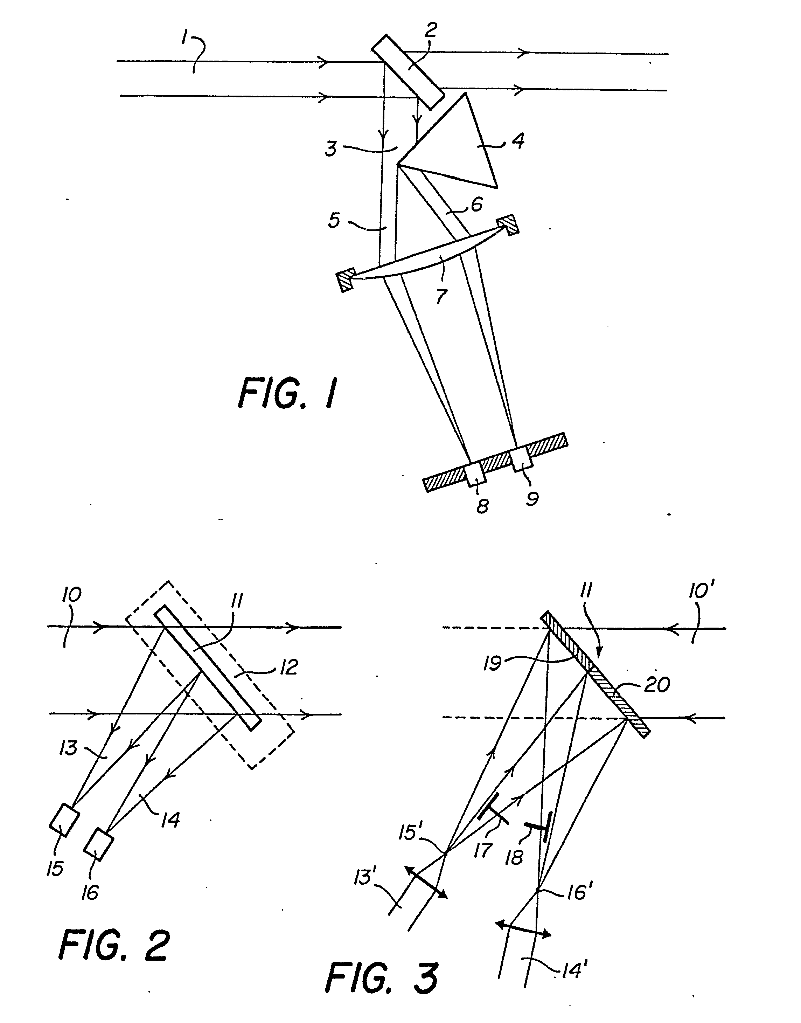

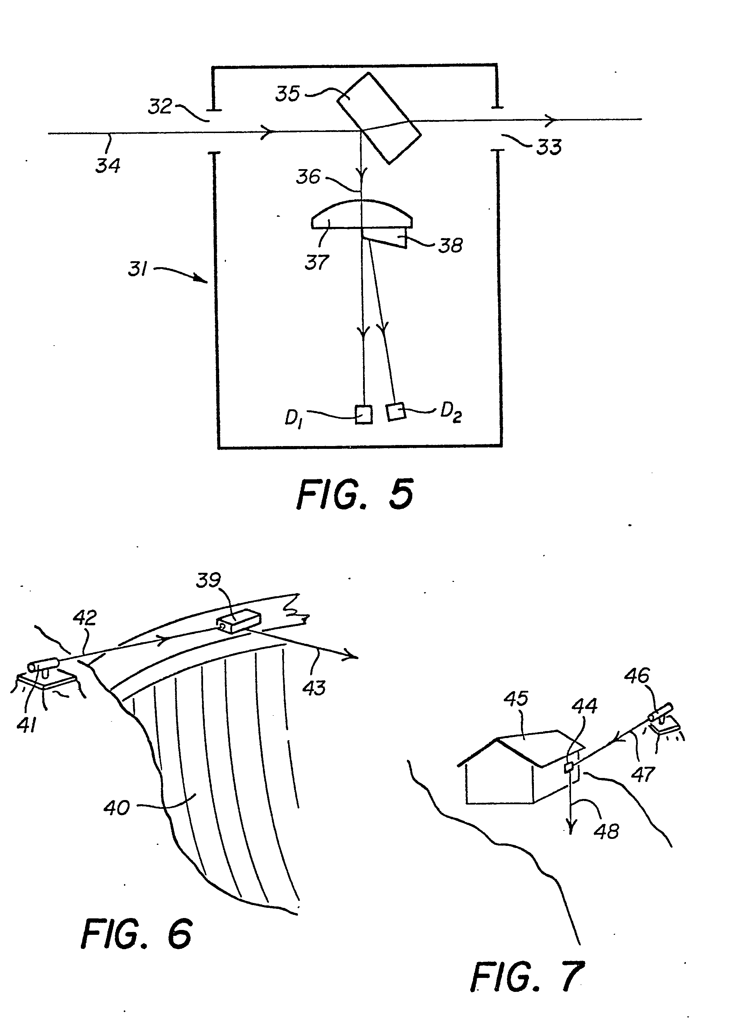

En référence à la fig. 1, une source (non représentée) émet un faisceau parallèle 1 de lumière cohérente, appelé faisceau de référence, en direction d'un objet (non représenté), dont on souhaite détecter et éventuellement mesurer une déformation et/ou un déplacement. Une telle mesure peut par exemple être utile pour surveiller un barrage (voir fig. 6) ou une digue, ou pendant des opérations de mise en place de longerons en béton précontraint, couramment utilisés dans la fabrication des ponts routiers ou autres. Au cours de cette mise en place, il est important d'éviter toute flexion du longeron susceptible de provoquer la rupture des gaines ou tuyaux noyés dans la masse.

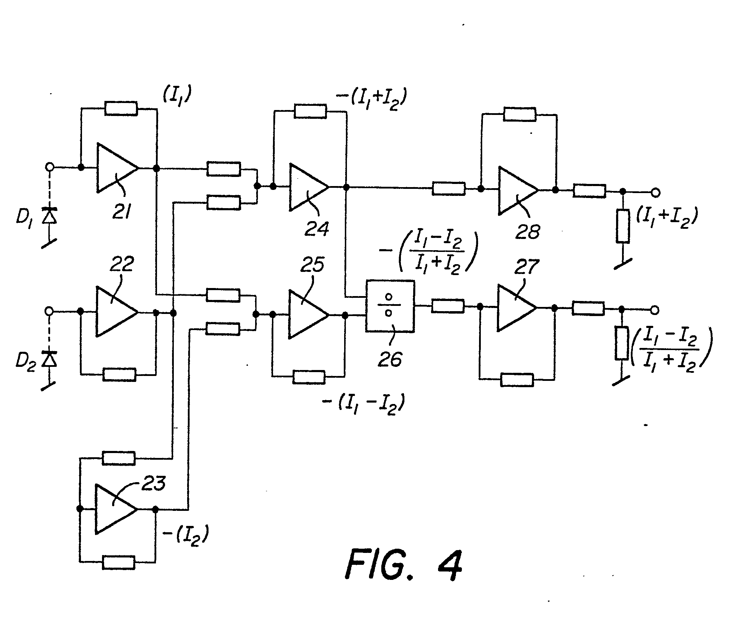

Pour effectuer des mesures de déformation d'un objet allongé tel qu'une poutre en béton précontraint, on peut prévoir un conduit creux ménagé à l'intérieur de l'objet ou rigidement fixé à cet objet, à travers lequel on émet le faisceau de référence 1. En un certain nombre de points fixes prédéterminés, on effectue un prélèvement d'une partie de ce faisceau en réfléchissant, par exemple, cinq pour cent de la lumière du faisceau à chacune des stations prévues. Dans ce but, on interpose, sur le faisceau 1, une surface semi-réfléchissante 2 qui réfléchit une partie de la lumière sous la forme d'un faisceau dévié 3. Un prisme 4 est interposé sur le faisceau 3 de telle manière qu'en l'absence de toute déformation ou déplacement, c'est-à-dire lorsque la position réelle de l'objet correspond à sa position théorique, le faisceau 3 soit divisé en deux faisceaux 5 et 6 distincts, d'égale intensité et formant un angle aigu entre eux. Une lentille 7 permet de focaliser respectivement les deux faisceaux 5 et 6 sur deux détecteurs 8 et 9 connectés à un circuit électronique décrit plus en détail en référence à la fig. 4.

La surface semi-réfléchissante 2, qui peut être un miroir semi-transparent, est fixée rigidement à l'objet dont on détecte et/ou mesure l'éventuelle déformation. Le prisme et la lentille sont également montés de façon rigide à cet objet dans une position prédéterminée l'un par rapport à l'autre, par rapport au miroir semi-transparent 2 et par rapport aux détecteurs 8 et 9.

Lorsque l'objet subit une déformation, l'ensemble des éléments optiques se déplace légèrement par rapport au faisceau 1, de sorte que le prisme 4 engendre un faisceau 6 qui peut être soit plus intense, soit moins intense que le faisceau 5 selon le sens de la déformation subie par l'objet. Cette différence d'intensité lumineuse, entre les deux faisceaux 5 et 6, est détectée par les détecteurs 8 et 9 et mesurée par le circuit électronique sous la forme d'un rapport

$$\frac{I_1 - I_2}{I_1 + I_2}$$

où $I_1$ correspond par exemple à l'intensité lumineuse du faisceau 5 et $I_2$ correspond à l'intensité lumineuse du faisceau 6. La mesure de ce rapport permet de rendre le résultat de la mesure indépendant de l'intensité incidente. La précision de la mesure est de l'ordre du dixième de millimètre, ce qui permet de couvrir un secteur industriellement important qui se situe entre les mesures classiques effectuées à l'aide de théodolites et les mesures sophistiquées effectuées à l'aide de dispositifs interférométriques.

La fig. 2 illustre schématiquement une autre forme de réalisation du dispositif décrit précédemment. Ce dispositif se compose essentiellement d'un hologramme 11, de préférence incrusté dans un bloc de résine transparente 12 représentée en traits interrompus, qui est interposée sur le trajet du faisceau de lumière cohérente 10. Cet hologramme a la propriété de diviser la partie de la lumière prélevée du faisceau 10 en deux faisceaux 13 et 14 convergeant respectivement sur les détecteurs 15 et 16.

L'hologramme de phase 11 est enregistré de préférence sur une gélatine dichromée ou tout autre matériau approprié permettant d'obtenir le même résultat. Comme le montre la fig. 3, on utilise à cet effet un faisceau de référence 10' et deux faisceaux 13' et 14', respectivement focalisés aux points 15' et 16' correspondant aux positions respectives des détecteurs 15 et 16, et dont on obture une partie à l'aide de caches 17 et 18 de telle manière que l'hologramme 11 comporte deux plages 19 et 20, la première étant la photographie des franges d'interférence obtenues par l'interférence d'une partie du faisceau 13' avec le faisceau de référence 10', et la seconde la photographie des franges d'interférence obtenues par l'interférence d'une partie du faisceau 14' avec le faisceau de référence 10'.

La fig. 4 représente schématiquement le circuit de mesure relié aux détecteurs. Le signal de sortie du détecteur $D_1$ est transmis à un amplificateur 21, et le signal de sortie du détecteur $D_2$ est transmis à un amplificateur 22. Les signaux recueillis à la sortie, qu'on appellera par la suite respectivement $I_1$ et $I_2$, correspondent respectivement aux intensités lumineuses des faisceaux respectivement focalisés sur les détecteurs $D_1$ et $D_2$. Un inverseur 23 permet d'inverser le signal $I_2$, en fournissant, à sa sortie, un signal $- I_2$ . Le bloc sommeur-inverseur 24 permet d'obtenir le signal

$- (I_1 + I_2)$. Le bloc sommeur-inverseur 25 permet d'obtenir le signal $- (I_1 - I_2)$. Le diviseur 26, qui reçoit les signaux de sortie des sommeurs-inverseurs 24 et 25, fournit à sa sortie le signal

$$- \frac{I_1 - I_2}{I_1 + I_2}.$$

Un inverseur 27 fournit finalement le résultat cherché, soit le rapport

$$\frac{I_1 - I_2}{I_1 + I_2}.$$

Parallèlement, un inverseur 28, connecté à la sortie du sommeur-inverseur 24, permet d'obtenir un signal correspondant à la somme $I_1 + I_2$.

Le signal $I_1 + I_2$ permet de contrôler la source lumineuse aux points de mesure. Le signal correspondant au rapport

$$\frac{I_1 - I_2}{I_1 + I_2}$$

permet de rendre la mesure indépendante de l'intensité incidente.

D'autres circuits de mesure pourraient bien entendu être utilisés en liaison avec le dispositif de surveillance décrit. D'autre part, les signaux recueillis à la sortie pourraient être enregistrés, traités et/ou introduits dans un dispositif de surveillance, par exemple équipé d'un système d'alarme.

La fig. 5 représente une forme de réalisation plus compacte du dispositif de la fig. 1. Un boîtier 31 comporte une fenêtre 32 et éventuellement une fenêtre 33 opposée à la fenêtre 32, pour permettre respectivement la pénétration du faisceau de référence 34 vers une surface semi-réfléchissante 35 et la sortie de la partie restante du faisceau de référence vers d'autres dispositifs interposés sur le trajet lumineux. La surface semi-réfléchissante 35 transmet une partie de la lumière sous la forme d'un faisceau 36 vers un bloc composé d'une lentille 37 et d'un prisme 38 fixé, par exemple par collage, sur une moitié de la lentille. Une partie du faisceau 36 est transmise sans déviation par la lentille 37 sur le détecteur $D_1$ disposé sur l'axe de la lentille, et une partie de ce faisceau est déviée par le prisme 38 sur le détecteur $D_2$.

Comme précédemment, le dispositif est réglé de telle manière que, en l'absence de toute déformation ou déplacement de l'objet à surveiller, les intensités lumineuses des deux faisceaux convergeant sur les détecteurs $D_1$ et $D_2$ sont égales. Ces intensités subiront des variations détectables et mesurées sur la forme du rapport

$$\frac{I_1 - I_2}{I_1 + I_2},$$

lorsque l'objet surveillé subit un déplacement ou une déformation.

Les fig. 6 et 7 illustrent deux formes particulières d'application du dispositif décrit. Dans l'exemple illustré par la fig. 6, un boîtier 39, identique à celui décrit en référence à la fig. 5, est fixé à la partie supérieure du mur 40 d'un barrage. Une source de lumière cohérente 41 est montée en un point d'observation fixe. Cette source émet un faisceau de référence 42 en direction du point de mesure 39, de sorte que tout déplacement ou toute déformation, dans le sens de la flèche 43, pourra être détecté et mesuré par le dispositif décrit.

La fig. 7 illustre schématiquement une autre utilisation du dispositif décrit. Dans cette application, le boîtier de mesure 44 est par exemple fixé à l'un des murs d'une construction 45 placé sur un terrain relativement instable. La source de lumière cohérente 46 émet un faisceau de référence 47 en direction du dispositif de mesure 44, destiné à détecter et à mesurer un éventuel affaissement du terrain dans le sens de la flèche 48.

Le dispositif décrit précédemment peut se présenter sous la forme d'une variante adaptée pour détecter et/ou mesurer un déplacement selon deux directions perpendiculaires entre elles. Selon cette variante, il se compose en fait de deux unités disposées en série, l'une permettant d'effectuer les mesures selon une première direction perpendiculaire au faisceau de référence, et l'autre selon une seconde direction perpendiculaire au faisceau de référence et à la première direction. Un tel dispositif est en mesure de déterminer à la fois les composantes horizontale et verticale d'un déplacement. Il comprend en fait un premier dispositif pour prélever et dévier une partie du faisceau de référence selon une première direction sensiblement perpendiculaire à ce faisceau, et un second dispositif monté en série avec le précédent, c'est-à-dire à la suite du premier sur le trajet du faisceau de référence, ce second dispositif étant «tourné» à 90° par rapport au précédent, pour prélever et dévier une partie du faisceau de référence selon une direction perpendiculaire à la fois au faisceau de référence et à la première direction mentionnée précédemment. Cette variante n'est pas illustrée par les dessins, mais est constituée par deux unités identiques «tournées» l'une par rapport à l'autre de 90° et pouvant être logées dans un même boîtier. La partie du faisceau de référence sortant du premier dispositif est le faisceau incident pénétrant dans le second disposirif.

### Revendications

1.Procédé pour détecter optiquement et/ou mesurer une déformation et/ou un déplacement d'un objet ou partie d'objet dans une direction sensiblement perpendiculaire à un faisceau lumineux de référence, comportant les phases suivantes:

a) on émet ledit faisceau lumineux de référence en direction d'un point solidaire dudit objet,

b) on interpose, sur ce faisceau de référence, un moyen optique pour prélever et dévier au moins une partie de ce faisceau de référence selon ladite direction sensiblement perpendiculaire au faisceau de référence, ce moyen optique étant rigidement lié à l'objet audit point fixe, caractérisé en ce qu'il comporte en outre les phases suivantes:

c) on divise ledit faisceau dévié en deux faisceaux distincts ayant la même intensité lumineuse lorsque ledit objet n'a subi aucune déformation et/ou aucun déplacement perpendiculaire au faisceau de référence,

d) on focalise lesdits faisceaux distincts respectivement sur deux détecteurs, et

e) on mesure le rapport:

$$\frac{I_1 - I_2}{I_1 + I_2}$$

où $I_1$ représente l'intensité lumineuse de l'un des faisceaux, et où $I_2$ représente l'intensité lumineuse de l'autre faisceau.

2. Procédé selon la revendication 1, caractérisé en ce que, pour détecter optiquement et/ou mesurer une déformation et/ou un déplacement d'un objet ou partie d'objet dans une autre direction perpendiculaire à ladite direction et sensiblement perpendiculaire au faisceau lumineux de référence, la phase b) est modifiée dans le sens que le moyen optique prélève et dévie une partie de ce faisceau de référence et en ce qu'on interpose, sur le faisceau de référence et en série par rapport audit moyen optique, un autre moyen optique pour prélever et dévier au moins une partie du faisceau de référence restant selon l'autre direction, cet autre moyen étant rigidement lié à l'objet à un autre point fixe et on répète les phases c), d) et e) pour ledit faisceau restant.

3. Dispositif pour détecter optiquement et/ou mesurer une déformation et/ou un déplacement d'un objet ou partie d'objet dans une direction sensiblement perpendiculaire à un faisceau de référence, comportant une source de lumière cohérente agencée pour fournir un faisceau de référence (1; 10; 34), un moyen optique (2; 11; 35) agencé pour prélever et dévier au moins une partie de ce faisceau de référence selon ladite direction, ce moyen optique étant rigidement relié à l'objet en un point fixe de ce dernier, le dispositif étant caractérisé en ce qu'il comporte en outre un moyen (4; 11; 37, 38) pour diviser ledit faisceau dévié en deux faisceaux distincts (5, 6; 13, 14), ce moyen pour diviser étant agencé de telle manière que les deux faisceaux divisés aient la même intensité lumineuse lorsque ledit objet n'a subi aucune déformation et/ou aucun déplacement perpendiculaire au faisceau de référence et des moyens (8, 9, 21–27; 15, 16, 21–27; $D_1$, $D_2$, 21–27) comportant deux détecteurs pour mesurer le rapport:

$$\frac{I_1 - I_2}{I_1 + I_2}$$

où $I_1$ représente l'intensité lumineuse de l'un des deux faisceaux et $I_2$ représente l'intensité lumineuse de l'autre.

4. Dispositif selon la revendication 3, caractérisé en ce que le moyen optique (2; 11; 35) comprend une surface semi-réfléchissante interposée sur le trajet dudit faisceau, cette surface semi-réfléchissante étant liée rigidement à l'objet.

5. Dispositif selon la revendication 4, caractérisé en ce que le moyen pour diviser comporte un élément prismatique (4; 38) interposé sur la moitié du faisceau dévié, cette moitié étant déterminée en l'absence de toute déformation et/ou de tout déplacement de l'objet, cet élément prismatique étant solidaire de l'objet et se trouvant dans une position prédéterminée par rapport à la surface semi-réfléchissante.

6. Dispositif selon la revendication 5, caractérisé en ce qu'il comporte un moyen (7; 37) pour focaliser les deux faisceaux divisés sur les deux détecteurs (8, 9; $D_1$, $D_2$), ce moyen pour focaliser comprenant au moins une lentille solidaire dudit objet et montée dans une position prédéterminée par rapport à l'élément prismatique (4; 38).

7. Dispositif selon la revendication 3, caractérisé en ce que l'un au moins entre le moyen optique, le moyen pour diviser et un moyen pour focaliser les deux faisceaux sur les deux détecteurs comporte un hologramme de phase (11).

8. Dispositif selon la revendication 6, caractérisé en ce que la surface semi-réfléchissante, l'élément prismatique et le dispositif pour focaliser les faisceaux divisés sont remplacés par un hologramme de phase (11).

9. Dispositif selon la revendication 8, caractérisé en ce que ledit hologramme de phase (11) est noyé dans un bloc d'un matériau transparent (12), comportant un boîtier agencé pour fixer ledit bloc à l'objet et des moyens pour fixer les deux détecteurs (15, 16).

10. Dispositif selon la revendication 6, caractérisé en ce qu'il comporte une seule lentille (37) convergente, le prisme (38) étant collé sur une moitié de cette lentille et la pointe du prisme coïncidant avec l'axe de la lentille.

11. Dispositif selon la revendication 3, caractérisé en ce que pour détecter optiquement et/ou mesurer une déformation et/ou un déplacement d'un objet ou partie d'objet dans une autre direction perpendiculaire à ladite direction et sensiblement perpendiculaire au faisceau lumineux de référence, le moyen optique est agencé pour prélever et dévier une partie de ce faisceau de référence selon ladite direction, et en ce qu'il comprend un autre moyen optique interposé en série par rapport audit moyen optique sur le faisceau de référence restant, un autre moyen pour diviser et des autres moyens pour mesurer ledit rapport, l'autre moyen optique, l'autre moyen pour dévier et les autres moyens pour mesurer ledit rapport coopérant entre eux et étant semblables respectivement au moyen optique, au moyen pour diviser et aux moyens pour mesurer le rapport.

12. Application du procédé selon la revendication 1, pour détecter et/ou mesurer une déformation de flexion d'un objet allongé.

13. Application du procédé selon la revendication 1, pour détecter un déplacement perpendiculaire à la direction du faisceau de référence d'une construction liée à un terrain instable.

## Claims

1. Method to detect optically and/or to measure a deformation and/or a displacement of an object or part of an object in a direction roughly perpendicular to a reference beam, comprising the following phases:

a) the said reference beam is emitted in the direction of a point integral with the said object,

b) on this reference beam an optical means is interposed to deduct and deflect at least one part of this reference beam according to the said direction roughly perpendicular to the reference beam, this optical means being rigidly connected to the object at the said fixed point, characterised in that it furthermore comprises the following phases:

c) the said beam is divided into two distinct beams having the same luminous intensity when the said object has not undergone any deformation and/or any displacement perpendicular to the reference beam,

d) the said distinct beams are respectively focused on two detectors, and

e) the relationship:

$$\frac{I_1 - I_2}{I_1 + I_2}$$

is measured, in which $I_1$ represents the luminous intensity of one of the beams, and in which $I_2$ represents the luminous intensity of the other.

2. Method according to Claim 1, characterised in that, to detect optically and/or measure a deformation and/or a displacement of an object or part of an object in another direction perpendicular to the said direction and roughly perpendicular to the reference beam, phase b) is modified in that the optical means deducts and deflects a part of this reference beam and in that, on the reference beam and in series in relation to the said optical means, another optical means is interposed to deduct and deflect at least a part of the remaining reference beam in the other direction, this other means being rigidly connected to the object at another fixed point and phases c), d) and e) are repeated for the said remaining beam.

3. Device to detect optically and/or to measure a deformation and/or displacement of an object or part of an object in a direction roughly perpendicular to a reference beam of light, comprising a coherent light source designed to provide a reference beam (1; 10; 34), an optical means (2; 11 ; 35) designed to deduct and deflect at least one part of this reference beam in the said direction, this optical means being rigidly connected to the object at a fixed point of the latter, the device being characterised in that it furthermore comprises a means (4; 11; 37, 38) to divide the said deflected beam into two distinct beams (5, 6; 13, 14), this means for dividing being designed so that the two divided beams have the same luminous intensity when the said object has not undergone any deformation and/or any displacement perpendicular to the reference beam, and means (8, 9, 21–27 ; 15, 16, 21–27; $D_1$, $D_2$, 21–27) comprising two detectors to measure the relationship:

$$\frac{I_1 - I_2}{I_1 + I_2}$$

in which $I_1$ represents the luminous intensity of one of the two beams and $I_2$ represents the luminous intensity of the other.

4. Device according to Claim 3, characterised in that the optical means (2; 11; 35) comprises a semi-reflecting surface interposed on the path of the said beam, this semi-reflecting surface being rigidly connected to the object.

5. Device according to Claim 4, characterised in that the means to divide has a prismatic element (4; 38) interposed on the half of the deflected beam, this half being determined in the absence of any deformation and/or of any displacement of the object, this prismatic element being integral with the object and in a predetermined position in relation to the semi-reflecting surface.

6. Device according to Claim 5, characterised in that it has a means (7; 37) to focus the two divided beams on the two detectors (8, 9; $D_1$, $D_2$), this focusing means having at least one lens integral with the said object and mounted in a predetermined position in relation to the prismatic element (4; 38).

7. Device according to Claim 3, characterised in that at least one of the optical means, the dividing means and a means for focusing the two beams on the two detectors has a phase hologram (11).

8. Device according to Claim 8, characterised in that the semi-reflecting surface, the prismatic element and the device for focusing the divided beams are replaced by a phase hologram (11).

9. Device according to Claim 8, characterised in that the said phase hologram (11) is embedded in a block of transparent material (12), comprising a case designed to fix the said block to the object and means to fix the two detectors (15, 16).

10. Device according to Claim 6, characterised in that it has a single converging lens (37), the prism being stuck on one half of this lens and the point of the prism coinciding with the axis of the lens.

11. Device according to Claim 3, characterised in that to detect optically and/or to measure a deformation and/or a displacement of an object or part of an object in another direction perpendicular to the said direction and roughly perpendicular to the reference beam, the optical means is designed to deduct and deflect a part of this reference beam in the said direction, and in that it has another optical means interposed in series in relation to the said optical means on the remaining reference beam, another means for dividing and other means for measuring the said relationship between them and being similar respectively to the optical means, the means for dividing and the means for measuring the relationship.

12. Application of the method according to Claim 1, to detect and/or to measure a bending deformation of an elongated object.

13. Application of the method according to Claim 1, to detect a displacement perpendicular to the direction of the reference beam of a structure connected to an unstable terrain.

**Patentansprüche**

1. Verfahren zur optischen Anzeige und/oder zum Messen einer Verformung und/oder der Verschiebung eines Objektes oder eines Objektteiles in eine zu einem Bezugslichtstrahl deutlich senkrechte Richtung, welches folgende Arbeitsgänge umfasst:

a) man sendet den besagten Bezugslichtstrahl in Richtung auf einen fest mit dem besagten Objekt verbundenen Punkt,

b) man bringt in diesen Bezugsstrahl ein optisches Mittel, um mindestens einen Teil dieses Bezugsstrahles abzugreifen und in die besagte, zum Bezugsstrahl deutlich senkrechte Richtung abzulenken, wobei dieses optische Mittel am besagten Festpunkt mit dem Objekt starr verbunden ist,

c) man teilt den besagten abgelenkten Strahl in zwei scharfe Strahlen, welche dieselbe Lichtintensität haben, wenn das besagte Objekt noch keinerlei Verformung und/oder noch keinerlei Verschiebung senkrecht zum Bezugsstraht unterworfen ist,

d) man bündelt die besagten scharfen Strahlen auf zwei Anzeigegeräte, und

e) man misst das Verhältnis

$$\frac{I_1 - I_2}{I_1 + I_2}$$

wobei $I_1$ die Lichtintensität des einen Strahles, $I_2$ die Lichtintensität des anderen Strahles bedeutet.

2. Verfahren nach Anspruch 1, dadurch gekennzeichnet, dass zum optischen Anzeigen und/oder zum Messen einer Verformung und/oder einer Verschiebung eines Objektes oder eines Objektteiles in eine andere senkrecht zur besagten Richtung und deutlich senkrecht zum Bezugslichtstrahl liegende Richtung, der Arbeitsgang b) in dem Sinne abgewandelt ist, dass das optische Mittel einen Teil dieses Bezugsstrahles abnimmt und ablenkt und dass man in den Bezugsstrahl und bezüglich des besagten optischen Mittels dahinter ein weiteres optisches Mittel einschaltet, um mindestens einen Teil des restlichen Bezugsstrahles abzunehmen und nach der anderen Richtung abzulenken, wobei dieses andere Mittel an einem anderen Fixpunkt des Objektes fest angebracht ist und man wiederholt die Arbeitsgänge c), d) und e) für den besagten Reststrahl.

3. Vorrichtung zur optischen Anzeige und/oder zum Messen einer Verformung und/oder einer Verschiebung eines Objektes in eine zu einem Bezugsstrahl deutlich senkrechte Richtung, die eine Quelle für kohärentes Licht aufweist, die geeignet ist, einen Bezugsstrahl (1; 10; 34) zu liefern, und ein optisches Mittel (2; 11; 35) welches geeignet ist, mindestens einen Teil dieses Bezugsstrahles abzugreifen und in die besagte Richtung abzulenken, wobei dieses optische Mittel starr am Objekt befestigt ist, und zwar an einem festen Punkt des letzteren, dabei ist die Vorrichtung dadurch gekennzeichnet, dass sie ausserdem noch ein Mittel (4; 11; 37; 38) aufweist, um besagten abgelenkten Strahl in zwei deutliche Strahlen (5; 6; 13; 14) aufzuteilen, wobei dieses Mittel zum Aufteilen so eingerichtet ist, dass die zwei getrennten Strahlen dieselbe Lichtintensität haben, wenn besagtes Objekt noch keinerlei Verformung und/oder keinerlei Verschiebung rechtwinklig zum Bezugsstrahl erfahren hat, und weitere Mittel (8, 9, 21–27; 15, 16, 21–27; D$_1$, D$_2$, 21–27), welche zwei Anzeigengeräte aufweisen, um das Verhältnis

$$\frac{I_1 - I_2}{I_1 + I_2}$$

zu messen,
wobei I$_1$ die Lichtintensität des einen der zwei Strahlen und I$_2$ die Lichtintensität des anderen bedeutet.

4. Vorrichtung nach Anspruch 3, dadurch gekennzeichnet, dass das optische Mittel (2; 11; 35) eine halbreflektierende Oberfläche aufweist, die in den Weg des besagten Strahles gebracht wird, wobei diese halbreflektierende Oberfläche starr mit dem Objekt verbunden ist.

5. Vorrichtung nach Anspruch 4, dadurch gekennzeichnet, dass das Mittel zum Teilen ein prismatisches Element (4; 38) aufweist, das über die Hälfte des abgelenkten Strahles zwischengeschaltet ist, wobei man diese Hälfte bestimmt, solange noch keine Verformung und/oder noch keine Verschiebung des Objektes vorliegt, dabei ist dieses prismatische Element formschlüssig mit dem Objekt verbunden und befindet sich in einer, in Bezug auf die halbreflektierende Fläche, vorher bestimmten Lage.

6. Vorrichtung nach Anspruch 5, dadurch gekennzeichnet, dass sie ein Mittel (7; 37) zum Bündeln der zwei geteilten Strahlen auf die zwei Anzeigegeräte (8, 9; D$_1$, D$_2$) aufweist, wobei dieses Mittel zum Bündeln mindestens eine fest mit besagtem Objekt verbundene Linse enthält, die in einer in Bezug auf das prismatische Element (4, 38) vorher bestimmten Lage montiert ist.

7. Vorrichtung nach Anspruch 3, dadurch gekennzeichnet, dass wenigstens eines der Mittel, sei es das optische, dasjenige zum Teilen oder dasjenige zum Bündeln der zwei Strahlen auf die zwei Anzeigegeräte, ein Phasenhologramm (11) erfordert.

8. Vorrichtung nach Anspruch 6, dadurch gekennzeichnet, dass man die halbreflektierende Oberfläche, das prismatische Element und die Vorrichtung zum Bündeln der geteilten Strahlen durch ein Phasenhologramm ersetzt.

9. Vorrichtung nach Anspruch 8, dadurch gekennzeichnet, dass besagtes Phasenhologramm (11) in einen Block aus transparentem Material (12) eingegossen ist, der ein Gehäuse aufweist, welches geeignet ist, um besagten Block am Objekt zu befestigen und Mittel, um die zwei Anzeigegeräte (15, 16) zu befestigen.

10. Vorrichtung nach Anspruch 6, dadurch gekennzeichnet, dass sie eine einzelne Sammellinse (37) aufweist, wobei das Prisma (38) auf eine Hälfte dieser Linse geklebt ist, und die Spitze des Prismas mit der Achse der Linse zusammenfällt.

11. Vorrichtung nach Anspruch 3, dadurch gekennzeichnet, dass zur optischen Anzeige und/oder zum Messen einer Verformung und/oder einer Verschiebung eines Objektes oder eines Objektteiles in eine andere Richtung, die senkrecht zur besagten Richtung und deutlich senkrecht zum Bezugslichtstrahl liegt, das optische Mittel in der Lage ist, einen Teil dieses Bezugsstrahles abzugreifen und in die besagte Richtung zu lenken, und dass sie ein weiteres optisches Mittel aufweist, welches hinter dem besagten optischen Mittel auf dem restlichen Bezugsstrahl eingeschaltet ist, ein weiteres Mittel zum Teilen und weitere Mittel zum Messen des besagten Verhältnisses, wobei das weitere optische Mittel, das weitere Mittel zum Teilen und die weiteren Mittel zum Messen der besagten Verhältnisse zusammenarbeiten und dem entsprechenden optischen Mittel, dem Mittel zum Teilen und den Mitteln zum Messen des Verhältnisses ähnlich sind.

12. Anwendung des Verfahrens nach Anspruch 1, um eine Veränderung der Durchbiegung eines länglichen Objektes anzuzeigen und/oder zu messen.

13. Anwendung des Verfahrens nach Anspruch 1, um eine Verschiebung einer in einem unstabilen Gelände liegenden Konstruktion senkrecht zur Richtung des Bezugsstrahles anzuzeigen.

0 048 688

FIG. 1

FIG. 2

FIG. 3

9

FIG. 4

FIG. 5

FIG. 6

FIG. 7